# EUROPEAN PATENT APPLICATION

(11) **EP 2 902 776 A1**
(43) Date of publication of application: **05.08.2015**
(21) Application number: 13836912.9
(22) Date of filing: 10.09.2013
(51) Int. Cl.: G01N 27/447, G01N 1/28

(54) **STORAGE METHOD AND STORAGE CONTAINER**

(30) Priority: 13.09.2012 JP 2012201341
(71) Applicant: Fukae Kasei Co., Ltd., Hyogo 651-2241 (JP)
(72) Inventor: HOSOKAWA Tadashi, Kobe-shi Hyogo 651-2241 (JP); AKIYOSHI Yukari, Kobe-shi Hyogo 651-2241 (JP)
(74) Representative: Grünecker Patent- und Rechtsanwälte PartG mbB
(86) International application number: PCT/JP2013/074385
(87) International publication number: WO 2014/042150

(57) **Abstract**

The invention provides a preservation method and a preservation holder capable of preserving a molecular weight marker at low cost with a hassle-free simple method. In a method for preserving a molecular weight marker, a molecular weight marker is preserved at normal temperature in a dried state by a preservation section 4 provided at a base section 2.

## Description

### Technical Field

The present invention relates to a preservation method and a preservation holder for preserving a molecular weight marker served as a reference when estimating a molecular weight of, e.g., a protein by electrophoresis, or for preserving a specimen such as a protein, an antibody, etc., whose molecular weight is to be estimated by electrophoresis.

### Background Art

In the fields of genetic engineering, medicine, biology, biochemistry, etc., when subjecting a specimen such as a DNA, a protein, an antibody, etc., to separation analysis depending on a molecular weight or a molecular size, electrophoresis using a molecular weight marker has been widely used.

In such molecular weight markers, a plurality of proteins whose molecular weights are known are generally preserved in a liquid state. For example, in Patent Document 1, a technique is disclosed in which protein molecular weight markers are preserved in a liquid state at ordinary temperature of 4 to 22°C or cryopreserved at -20°C. In this case, if the molecular weight markers in a liquid state are preserved at ordinary temperature, they readily deteriorate, shortening the preservable period. Therefore, it is considered that it is preferable to be cryopreserved. Further, also in specimens of proteins, antibodies, etc., mentioned above, they are generally preserved in a liquid state in the same manner as in molecular weight markers.

### Prior Art

### Patent Document

Patent Document 1: Japanese Unexamined Patent Application Publication (Translation of PCT application) No. 2008-547035

### Summary of the Invention

### Problems to be Solved by the Invention

However, in the case of cryopreserving molecular weight markers or specimens, a long-term preservation thereof can be attained, but a refrigeration equipment for the cryopreservation will be required, and it is required to thaw them at room temperature when in use. Therefore, there are problems that it causes high costs, it takes time, and it is not user friendly.

Further, in order to supply the thawed molecular weight markers or specimens to an electrophoresis device, it is required to perform operations of dispensing the molecular weight markers or specimens by sucking with a dispenser such as a pipette, etc., and dispensing to electrophoresis gel by a small amount. Also from this viewpoint, there are problems that it takes time and it is not user friendly.

The present invention was made in view of the aforementioned conventional situation, and aims to provide a preservation method and a preservation holder capable of preserving a molecular weight marker or a specimen at low cost with a hassle-free simple method.

### Means for Solving the Problems

The invention of claim 1 is directed to a preservation method for preserving a molecular weight marker for use in electrophoresis or a specimen such as a protein, an antibody, etc., whose molecular weight is to be estimated by electrophoresis, characterized in that the molecular weight marker or the specimen is preserved at ordinary temperature in a state in which the molecular weight marker or the specimen is held by a preservation section provided at a base section in a dried state.

The invention of claim 2 is characterized in that, in the preservation method according to claim 1, the preservation section is made of a filter paper, a nonwoven fabric, etc., attached to the base section, and wherein the molecular weight marker or the specimen is applied to the filter paper, the nonwoven fabric, etc., and then subjected to ordinary temperature drying or decompression drying.

The invention of claim 3 is characterized in that, in the preservation method according to claim 2, wherein the molecular weight marker not containing glycerol is applied to the preservation section.

The invention of claim 4 is is characterized in that, in the preservation method according to claim 3, a liquid mixture in which a protection agent such as sugar, alcohol, compound, etc., is mixed to the molecular weight marker not containing the glycerol is applied to the preservation section and thereafter subjected to ordinary temperature drying or decompression drying.

The invention of claim 5 is characterized in that, in the preservation method according to claim 1 or 2, the preservation section to which the molecular weight marker or the specimen was applied is dried and then preserved in a sealed state.

The invention of claim 6 is directed to the preservation method according to any one of claims 1 to 5, wherein the preservation section is supplied to an electrophoresis device in a state in which the preservation section is inserted into a storage recess formed in electrophoresis gel.

The invention of claim 7 is directed to a preservation holder for preserving a molecular weight marker to be employed for electrophoresis or a specimen such as a protein, an antibody, etc., whose molecular weight is to be estimated by electrophoresis, characterized in that the preservation holder includes a base section, a supporting section formed at one end of the base section, and a preservation section attached to the supporting section, and the molecular weight marker or the specimen is held by the preservation section in a dried state.

The invention of claim 8 is characterized in that, in the preservation holder according to claim 7, the preservation section is supplied to an electrophoresis device in a state in which the preservation section is inserted into a storage recess formed in electrophoresis gel.

The invention of claim 9 is characterized in that, in the preservation holder according to claim 7 or 8, a plurality of the base sections is each formed into a band plate shape, and arranged in parallel to each other at predetermined intervals with another ends of the base sections opposite to the supporting sections detachably connected to a connection plate..

### Effects of the Invention

According to the invention of claim 1, since a molecular weight marker or a specimen is preserved in the preservation section provided at the base section at ordinary temperature in a dried state, as compared with a conventional case in which it is cryopreserved, a facility such as a freezer, etc., can be eliminated, which can reduce the cost, attain a long term preservation with a simple method, and further eliminate a time-consuming thawing operation when in use, which in turn can improve the usability.

Further, the molecular weight marker or the specimen in a dried state can be supplied to an electrophoresis device as it is, which can eliminate a conventional time-consuming dispensing work. Also from this viewpoint, the cost can be reduced.

According to the invention of claim 2, the molecular weight marker or the specimen are applied to a filter paper, a nonwoven fabric, etc., and thereafter dried to be preserved. Therefore, it becomes possible to preserve the molecular weight marker or the specimen for a long period of time in a stable condition.

According to the invention of claim 3, since the molecular weight marker not containing glycerol is applied to the preservation section, inhibitation to the molecular weight marker at the drying step can be prevented.

That is, in general, a molecular weight marker is required to be precipitated in a specified slit formed in electrophoresis gel when supplied to the gel. For this reason, in the molecular weight marker, glycerol (glycerin) is contained for precipitating the marker itself.

Such glycerol has a characteristic feature that the absorbency is extremely high, and therefore glycerol is effective for a conventional solution type molecular weight marker which is cryopreserved at -20°C and freeze-thawed when in use, but it is not suitable for a molecular weight marker of the present invention in which a molecular weight marker is preserved in a dried state. Therefore, it is preferable to prepare a molecular weight marker not containing glycerol.

According to the invention of claim 4, a molecular weight marker is mixed together with a protection agent such as sugar, alcohol, compound, etc., and this liquid mixture is applied to the preservation section and then subjected to ordinary temperature drying or decompression drying. This stabilizes the molecular structure, etc., of the molecular weight marker at the time of drying, which in turn can attain a long-term preservation.

Further, by mixing a protection agent to a molecular weight marker not containing glycerol, the protection agent can have both a function of stably protecting the molecular weight marker and a function of precipitating the molecular weight marker when supplied to electrophoresis. This can prevent influence due to omission of glycerol.

In the invention of claim 5, since the preservation section to which the molecular weight marker or the specimen was applied is preserved in a sealed state, it is possible to prevent deterioration due to contamination by air, moisture, etc., which makes it possible to considerably extend the preservation period.

In the invention of claims 6 and 8, since the preservation section is supplied to the electrophoresis device in a state in which the preservation section is inserted into the recess formed in the electrophoresis gel, the molecular weight marker or the specimen in a dried state can be used as it is. As a result, a conventional time-consuming dispensing work can be eliminated.

According to the preservation holder of the invention of claim 7, since the molecular weight marker or the specimen is preserved in a dried state in the preservation section attached to the supporting section formed at one end of the base section, a facility such as a freezer, etc., can be eliminated as mentioned above, and the thawing operation when in use can be eliminated. Accordingly, the same effects as those of claim 1 can be obtained.

Further, since the preservation section having an injection function is integrally formed at the preservation holder, the handling becomes easy, and the preservation section can be supplied to an electrophoresis device in the preserved state, which eliminates the dispensing work which requires a researcher's manipulation.

According to the invention of claim 9, since the opposite side ends of the supporting sections of the base sections are connected to a common connection plate in parallel and in a detachable manner, a number of molecular weight markers or specimens can be preserved collectively, and can be used by separating the base section from the connection plate as needed.

### Brief Explanation of the Drawings

[Fig. 1] Fig. 1 is a front view of a preservation holder of a molecular weight marker according to Example 1 of the present invention.
[Fig. 2] Fig. 2 is a side view of the preservation holder.
[Fig. 3] Fig. 3 is a schematic structural view showing electrophoresis gel of the molecular weight marker.
[Fig. 4] Fig. 4 is a view of a preservation holder according to Example 2 of the present invention (Fig. 4(a) is a front view, and Fig. 4(b) is a side view).
[Fig. 5] Fig. 5 is a front view showing a modified Example of the preservation section of the aforementioned Example.

### Embodiment for Carrying Out the Invention

Hereinafter, embodiments of the present invention will be explained with reference to the attached drawings.

### Example 1

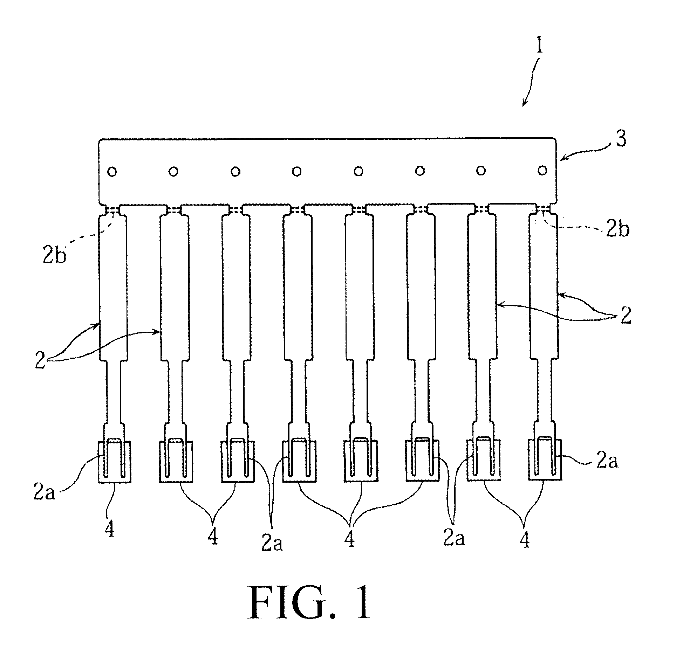

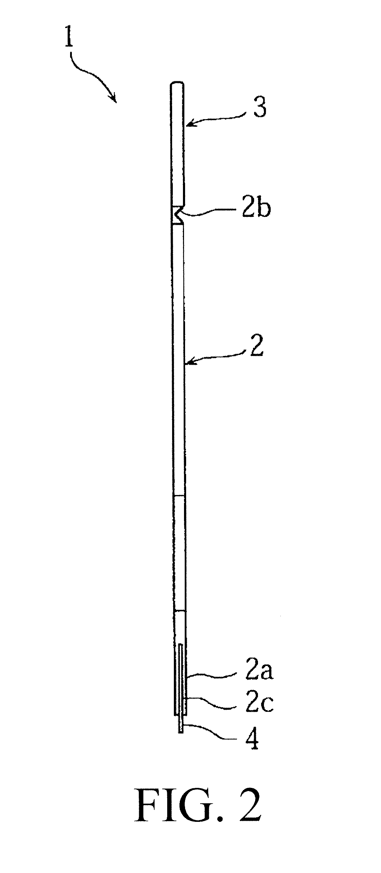

Figs. 1 to 3 are drawings for explaining a preservation method and a preservation holder for preserving a molecular weight marker, a specimen such as, a protein, an antibody, etc., according to Example 1 of the present invention. In this Example, the explanation will be directed to a case in which a molecular weight marker is preserved.

In figures, the reference numeral "1" denotes a preservation holder for a molecular weight marker. This preservation holder 1 has a structure in which one ends of a plurality (8 in this Example) of stick-like base sections 2 are integrally connected to a common connection plate 3 in parallel at predetermined intervals.

At the connection part of the one end of each base section 2 connecting to the connection plate 3, a thin-walled separation part 2b is formed by partially cutting the connection part. With this, each base section 2 can be easily detached from the connection plate 3.

At the lower end of each base section 2, a supporting section 2a having a roughly fork shape is integrally formed. Each supporting section 2a is integrally provided with a rectangular preservation section 4. In each supporting section 2a, a slit 2c is formed so as to divide the thickness of the supporting section 2a in half, and the preservation section 4 is integrally formed in the slit 2c by insert molding.

In each preservation section 4, a protein molecular weight marker is stored in a dried state and preserved at ordinary temperature. Each preservation section 4 is made of a filter paper, a nonwoven fabric, etc. The molecular weight marker is stored in the filter paper, the nonwoven fabric, etc., and preserved.

In the molecular weight marker, a mixed liquid in which a protection agent such as sugar, alcohol, compound, etc., is mixed to a protein as a standard is applied to the preservation section 4, and then subjected to natural drying at a room temperature of, e.g., 15°C or less or decompression drying with a vacuum pump, etc., to be adhered to the preservation section 4 in a permeated manner. Thereafter, the preservation holder 1 is preserved in a state in which it is accommodated in a sealed container, which is not illustrated. This enables preservation for 3 to 6 months at room temperature of 4 to 20°C. The molecular weight marker is subjected to drying processing in a state in which no glycerol is contained.

Even in the case of preserving proteins or specimens such as antibodies, etc., the same preservation method and preservation holder as in the aforementioned molecular weight marker are employed.

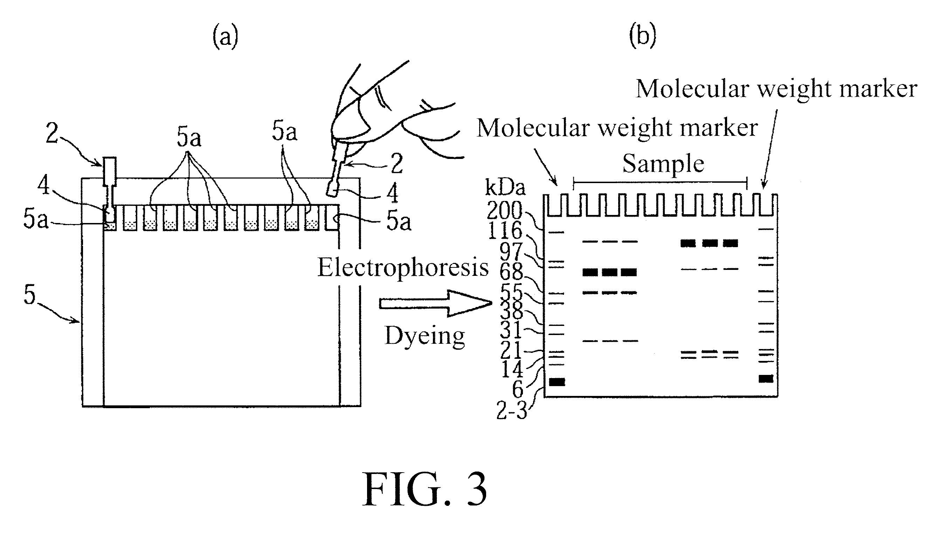

In Figs. 3(a) and 3(b), the reference numeral "5" denotes electrophoresis gel to be employed for polyacrylamide gel electrophoresis (SDS-PAGE). At the upper end of the electrophoresis gel 5, a number of storage recesses 5a each having a size, a shape, and a thickness corresponding to the preservation section 4 are formed.

In order to obtain a molecular weight of a specimen of a sample protein as an analysis target, the preservation holder 1 is taken out from the sealed container, and in this Example, two pieces of base sections 2 are detached from the connection plate 3. Then, the preservation section 4 of each base section 2 is inserted into each of the storage recesses 5a and 5a at the left and right ends of the electrophoresis gel 5 with hand, tweezers, etc., and specimens of sample proteins are dispensed in the remaining storage recesses 5a. Since the molecular weight marker preserved in the preservation section 4 is released into the storage recess 5a during this time, upon completion of dispensing of the sample proteins, the preservation sections 4 are taken out to initiate the migration. By performing a dying operation after completion of the migration, the migration distance of each sample protein is detected. By comparing the migration distance of each sample protein with the migration distances of the molecular weight markers at the left and right ends, a molecular weight of each sample protein can be estimated. The used base section 2 will be processed as industrial waste.

According to this Example as explained above, the molecular weight marker and the sample protein specimen are preserved in the preservation section 4 integrally provided at the stick-like base section 2 at normal temperature in a dried state. Therefore, as compared with a conventional case in which they are cryopreserved, the cost can be reduced, the long term preservation can be performed with a simple method, and further a time consuming thawing operation when in use can be eliminated, which in turn can improve the usability.

Further, the molecular weight marker and the specimen in a dried state can be supplied to an electrophoresis device as it is, which can eliminate a conventional time-consuming dispensing work. Also from this viewpoint, the cost can be reduced.

In this Example, the molecular weight marker and the specimen are preserved by applying to a filter paper, a nonwoven fabric, etc. Therefore, contamination due to moisture in air, etc., can be prevented, which in turn can preserve the molecular weight marker and the specimen for a long period of time in a stable condition.

Further, a protein whose molecular weight is known is mixed to a protection agent such as sugar, alcohol, compound, etc., and this liquid mixture is applied to the preservation section 4 and then subjected to ordinary temperature drying or decompression drying. Accordingly, the molecular structure of the molecular weight marker at the time of drying can be stabilized, which in turn can attain a long-term preservation. That is, if the molecular weight marker is dried as it is, there is a risk that the molecular structure of the molecular weight marker is destroyed at the time of drying. In this Example, since the molecular weight marker is protected by sugar, alcohol, compound, etc., the molecular structure can be stabilized.

Since the molecular weight marker is dried in a state in which no glycerol is contained, influence to the molecular weight maker in the drying step can be prevented. Further, since a protection agent such as sugar, compound, etc., is mixed to a molecular weight marker not containing glycerol, the protection agent can have both a function of stably protecting the molecular weight marker and a function of precipitating the molecular weight marker at the time of supplying to electrophoresis. Accordingly, influence due to the omission of glycerol can be avoided.

In this Example, since each preservation section 4 to which the molecular weight marker and the specimen were applied is preserved in a state of being sealed with a sealing container, etc., it is possible to prevent deterioration due to contamination by air, moisture, etc., which makes it possible to considerably extend the preservation period.

Further, since the preservation section 4 is supplied to the electrophoresis device in a state in which the preservation section 4 is inserted into the storage recess 5a formed in the electrophoresis gel 5, the molecular weight marker and the specimen in a dried state can be used as it is. Therefore, a conventional time-consuming dispensing work can be eliminated.

According to the preservation holder 1 of this Example, it is configured such that a fork-shaped supporting section 2a is integrally formed at the tip end of the base section 2 and the molecular weight marker and the specimen are preserved in the preservation section 4 insert-formed to the supporting section 2a in a dried state. Therefore, a facility such as a freezer, etc., mentioned above can be eliminated, and the thawing operation when in use can be eliminated.

Further, since the preservation section 4 to be inserted into the storage recess 5a of the electrophoresis gel 5 is integrally formed at the preservation holder 1, the handling becomes easy, and the preservation section 4 can be supplied to an electrophoresis device in the preserved state, which eliminates a dispensing work which requires a researcher's manipulation.

Further, since the base sections 2 are connected to a common connection plate 3 in parallel and in a detachable manner, a number of molecular weight markers or specimens can be preserved collectively, and can be used by separating the base section from the connection plate as needed.

### Example 2

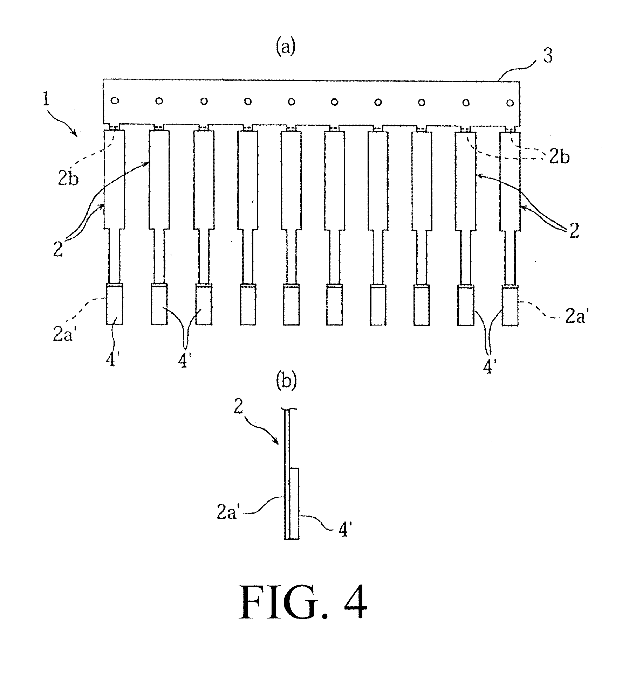

Figs. 4(a) and 4(b) are views for explaining a preservation holder according to Example 2 of the present invention. In these figures, the same symbol as in Fig. 1 denotes the same or corresponding portion.

The preservation holder 1 of this Example has a structure in which upper ends of ten base sections 2 are integrally connected to a common connection plate 3. At the lower end of each base section 2, a plate shaped supporting section 2a' is integrally formed. A rectangular preservation section 4' made of a filter paper, a nonwoven fabric, etc., is adhesively fixed to the supporting section 2a'. This preservation section 4' is about 1.0 mm or more in width.

In this Example, since the supporting section 2a' of each base section 2 is formed into a flat-plate like shape and the preservation section 4' is adhered to the supporting section 2a, the structure can be simplified as compared with the supporting section of Example 1

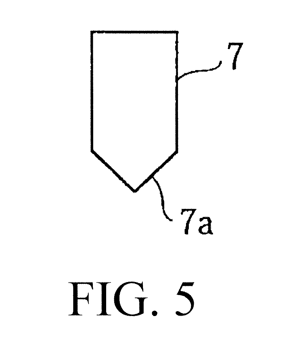

In Examples 1 and 2, the explanations were directed to the case in which the preservation section 4 (4') was formed into a rectangular shape, but the shape of the preservation section of the present invention is not limited to this. For example, as shown in Fig. 5, the preservation section 7 can be formed into a so-called home base shape having a tapered portion 7a which becomes narrower toward the tip end. In this case, the insertion into the electrophoresis gel can be performed easily.

### Description of Symbols

- 1: Preservation holder
- 2: Base section
- 2a, 2a': Supporting section
- 3: Connection plate
- 4, 4', 7: Preservation section
- 5: Electrophoresis gel
- 5a: Storage recess

## Claims

1. A preservation method for preserving a molecular weight marker for use in electrophoresis or a specimen such as protein, antibody, etc., whose molecular weight is to be estimated by electrophoresis, **characterized in that**
the molecular weight marker or the specimen is preserved at ordinary temperature in a state in which the molecular weight marker or the specimen is held by a preservation section provided at a base section in a dried state.

2. The preservation method according to claim 1,
wherein the preservation section is made of a filter paper, a nonwoven fabric, etc., attached to the base section, and
wherein the molecular weight marker or the specimen is applied to the filter paper, the nonwoven fabric, etc., and then subjected to ordinary temperature drying or decompression drying.

3. The preservation method according to claim 2, wherein the molecular weight marker not containing glycerol is applied to the preservation section.

4. The preservation method according to claim 3, wherein a liquid mixture in which a protection agent such as sugar, alcohol, compound, etc., is mixed to the molecular weight marker not containing glycerol is applied to the preservation section and thereafter subjected to ordinary temperature drying or decompression drying.

5. The preservation method according to any one of claims 1 to 4, wherein the preservation section to which the molecular weight marker or the specimen was applied is dried and then preserved in a sealed state.

6. The preservation method according to any one of claims 1 to 5, wherein the preservation section is supplied to an electrophoresis device in a state in which the preservation section is inserted into a storage recess formed in electrophoresis gel.

7. A preservation holder for preserving a molecular weight marker to be employed for electrophoresis or a specimen such as protein, antibody, etc., whose molecular weight is to be estimated by electrophoresis, **characterized in that**
the preservation holder includes a base section, a supporting section formed at one end of the base section, and a preservation section attached to the supporting section, and
the molecular weight marker or the specimen is held by the preservation section in a dried state.

8. The preservation holder according to claim 7, wherein the preservation section is supplied to an electrophoresis device in a state in which the preservation section is inserted into a storage recess formed in electrophoresis gel.

9. The preservation holder according to claim 7 or 8, wherein a plurality of the base sections is each formed into a band plate shape, and arranged in parallel to each other at predetermined intervals with another ends of the base sections opposite to the supporting sections detachably connected to a connection plate.
